# EUROPÄISCHE PATENTANMELDUNG

(11) **EP 3 219 593 A1**
(43) Veröffentlichungstag der Anmeldung: **20.09.2017**
(21) Anmeldenummer: 17158933.6
(22) Anmeldetag: 02.03.2017
(51) Int. Cl.: B62J 11/00, F16B 2/08, F16B 2/18, B62J 99/00

(54) **HALTER**

(30) Priorität: 14.03.2016 DE 202016101403 U
(71) Anmelder: Trelock GmbH, 48149 Münster (DE)
(72) Erfinder: Steinkamp, Winfried, 48249 Dülmen (DE)
(74) Vertreter: Hentrich Patentanwälte PartG mbB

(57) **Zusammenfassung**

Die Erfindung betrifft einen Halter zur lösbaren Befestigung eines Anbauteils an einer Strebe, wie einem Rahmenrohr oder einem Lenkerrohr eines Zweirades, mit einem ein Koppelglied (2) für das Anbauteil aufweisenden Gehäuse (3), mit einem zwischen einer Öffnungsstellung und einer Schließstellung verstellbar an dem Gehäuse (3) gelagerten Spannhebel (4), an dem das eine Ende eines um einen Teilbereich der Mantelfläche der Strebe zu führenden Spanngurtes (5) angeordnet ist, mit einer in dem Gehäuse ausgebildeten Öffnung (6), durch die das freie Ende des Spanngurtes (5) zurückführbar und mit einem am Gehäuse (3) angeordneten Klemmhebel (7) festsetzbar ist, wobei der Spanngurt (5) im Bereich zwischen dem Spannhebel (4) und dem Klemmhebel (7) durch Verstellen des Spannhebels (4) von der Öffnungsstellung in die Schließstellung spannbar ist. Der Klemmhebel (7) ist als zweiarmiger Hebel gestaltet mit einem ersten Hebelarm (8), der zur Anlage an den Spanngurt (5) vorgesehen ist und bei seinem freien Ende auf der dem Spanngurt zugewandten Seite einen Rastzahn (9) aufweist, wobei der zweite Hebelarm (10) als vorgespanntes Federglied gestaltet ist zur Beaufschlagung des ersten Hebelarmes (9) in Richtung des Spanngurtes (5).

## Beschreibung

Die Erfindung betrifft einen Halter zur lösbaren Befestigung eines Anbauteils an einer Strebe, wie einem Rahmenrohr oder einem Lenkerrohr eines Zweirades, mit einem ein Koppelglied für das Anbauteil aufweisenden Gehäuse, mit einem zwischen einer Öffnungsstellung und einer Schließstellung verstellbar an dem Gehäuse gelagerten Spannhebel, an dem das eine Ende eines um einen Teilbereich der Mantelfläche der Strebe zu führenden Spanngurtes angeordnet ist, mit einer in dem Gehäuse ausgebildeten Öffnung, durch die das freie Ende des Spanngurtes zurückführbar und mit einem am Gehäuse angeordneten Klemmhebel festsetzbar ist, wobei der Spanngurt im Bereich zwischen dem Spannhebel und dem Klemmhebel durch Verstellen des Spannhebels von der Öffnungsstellung in die Schließstellung spannbar ist.

Ein derartiger Halter ist aus der DE 20 2006 008 849 U1 bekannt, der sich in der Praxis grundsätzlich bewährt hat, da die Möglichkeit einer werkzeuglosen Befestigung des Halters an der Strebe gegeben ist. Dazu weist dieser Halter den Spanngurt auf, der durch die im Gehäuse ausgebildete Öffnung nach Umschlingung der Strebe zurückführbar ist und in dieser Position sodann durch manuelle Betätigung des Klemmhebels vorläufig gesichert wird. Die endgültige Spannung erfolgt dann durch Verstellung des Spannhebels.

Trotz der grundsätzlich mit diesem Halter verbundenen Vorteile hat sich in der Praxis das Bedürfnis ergeben, die Montage noch weiter zu vereinfachen.

Der Erfindung liegt damit die Aufgabe zugrunde, einen Halter der eingangs genannten Art so auszubilden, dass der Nutzer durch die Ausbildung des Halters bei dessen Montage an der Strebe unterstützt wird.

Diese Aufgabe wird bei einem Halter der eingangs genannten Art dadurch gelöst, dass der Klemmhebel als zweiarmiger Hebel gestaltet ist mit einem ersten Hebelarm, der zur Anlage an den Spanngurt vorgesehen ist und bei seinem freien Ende auf der dem Spanngurt zugewandten Seite einen Rastzahn aufweist, und dass der zweite Hebelarm als vorgespanntes Federglied gestaltet ist zur Beaufschlagung des ersten Hebelarmes in Richtung des Spanngurtes.

Bei diesem erfindungsgemäßen Halter liegt der Vorteil vor, dass durch die Ausbildung des Klemmhebels als zweiarmiger Hebel, der an seinem ersten Hebelarm bei seinem freien Ende einen Rastzahn aufweist, ein Formschluss zwischen dem Klemmhebel und dem Spanngurt hergestellt wird ohne eine aktive Tätigkeit des Nutzers, da mittels des vorgespannten Federgliedes der Rastzahn permanent durch eine Kraft in die Richtung beaufschlagt wird, die zur Lagefestlegung des Spanngurte erforderlich ist.

Im Rahmen der Erfindung ist dabei weiterhin vorgesehen, dass das Gehäuse einen bogenförmigen Anlagebereich für die Strebe aufweist, an dem der zweite Hebelarm abgestützt ist. Diese Ausgestaltung ermöglicht eine besonders kompakte Bauform und nutzt aus, dass durch den bogenförmigen Anlagebereich die Position des Halters gegenüber der Strebe vorgegeben ist und nur noch durch Umschlingung der Strebe mittels des Spanngurtes festgelegt werden muss.

Bei dem aus dem Stand der Technik bekannten Halter ist der Spanngurt als Textilgurt gestaltet, der entsprechend flexibel ist und durch den Klemmhebel zur Erzeugung der erforderlichen Klemmkraft deformiert werden kann. Im Rahmen der Erfindung hat es sich als vorteilhaft gezeigt, wenn der Spanngurt aus einem Material gebildet ist, dass die Ausbildung einer belastbaren Verzahnung erlaubt und dass auf der dem zweiten Hebelarm zugewandten Seite eine Verzahnung ausgebildet ist. Diese Verzahnung kann damit in vorteilhafter Weise mit dem Rastzahn zusammenwirken, wobei die belastbare Ausgestaltung der Verzahnung verhindert, dass Schlupf zwischen der Verzahnung und dem Rastzahn vorliegt.

In diesem Zusammenhang ist weiterhin vorteilhaft, wenn die Verzahnung als Sägezahnverzahnung gestaltet ist mit einer flachen Zahnflanke, die ein Darübergleiten des Rastzahnes in der einen Richtung erlaubt, und einer steilen Zahnflanke, die ein Darübergleiten des Rastzahnes in der andere Richtung blockiert. Diese Gestaltung fördert die Vereinfachung der Montage, da lediglich der Spanngurt durch die Öffnung des Gehäuses an den ersten Hebelarm des zweiarmigen Hebels vorbeigeführt werden muss, bis der Rastzahn über eine flache Zahnflanke der Sägezahnverzahnung gerutscht ist. Diese Bewegung kann dann fortgesetzt werden, bis eine angemessene Vorspannung des Spanngurtes durch den Nutzer festgestellt ist und der Nutzer den Spannhebel zur Erzeugung der gewünschten Endspannung in die Schließstellung verstellt. Ein Lockern der Spannung ist dabei durch die steile Zahnflanke blockiert.

Damit der Halter von der Strebe auch wieder demontiert werden kann, weist der erste Hebelarm an seinem freien Ende eine Löseleiste auf, die von dem Nutzer beaufschlagt werden kann, so dass der erste Hebelarm mit seinem Rastzahn sich aus der Verzahnung löst und der Spanngurt durch die Öffnung des Gehäuses wieder herausgezogen werden kann. Als zweckmäßig hat sich weiterhin gezeigt, dass der Spanngurt auf seiner der Strebe zugewandten Seite eine Anlagefläche mit einem erhöhten Reibwert aufweist, da so eine Festlegung der Drehlage des Halters relativ zur Strebe bereits bei geringerer Spannung des Spanngurtes erzielt wird.

Im Folgenden wird die Erfindung an einem in der Zeichnung dargestellten Ausführungsbeispiel näher erläutert; es zeigen:
- Fig. 1: die perspektivische Darstellung des Halters mit dem durch die Öffnung des Gehäuses eingeführten Spanngurt und dem Spannhebel in der Öffnungsstellung,

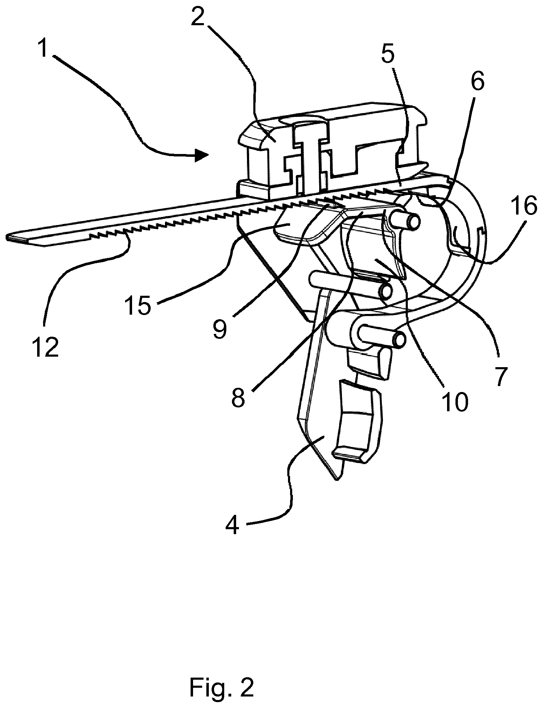

- Fig. 2: die perspektivische Darstellung eines Längsschnitts durch den Halter von Fig. 2,
- Fig. 3: einen Längsschnitt durch den Halter aus Fig. 1,
- Fig. 4: eine der Fig. 1 entsprechende Darstellung des Halters mit dem Spannhebel in der Schließstellung,

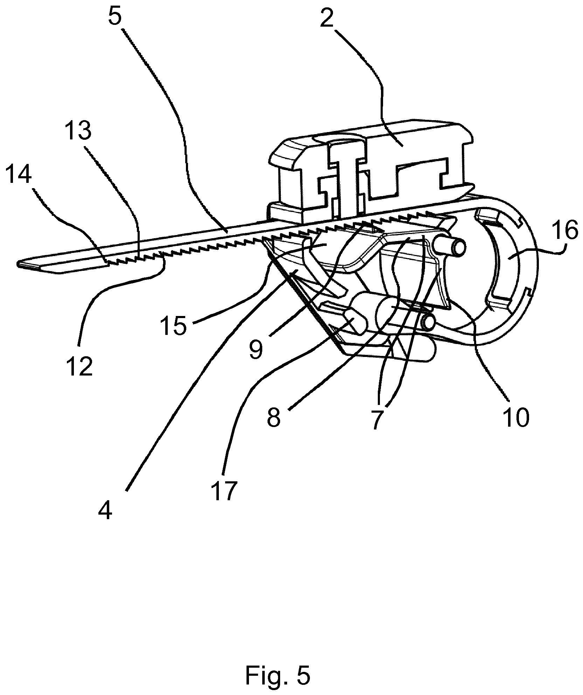

- Fig. 5: eine der Fig. 2 entsprechende Darstellung des Halters aus Fig. 4,

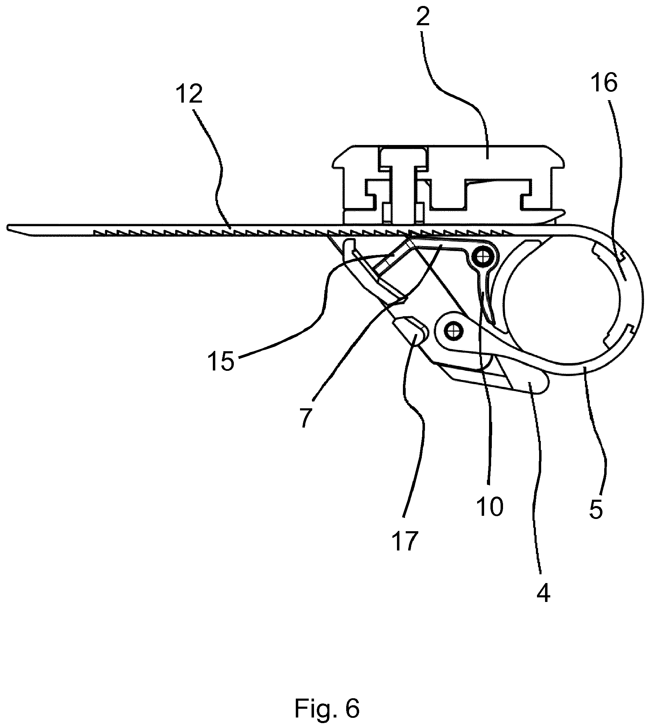

- Fig. 6: eine der Fig. 3 entsprechende Darstellung des Halters aus Fig. 4, und

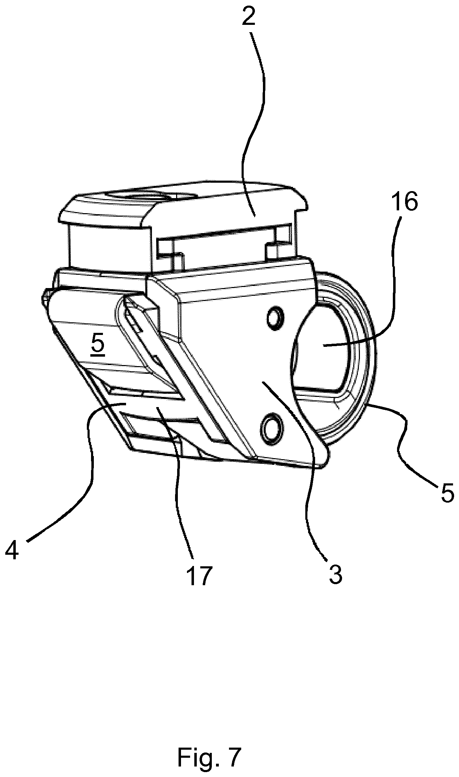

- Fig. 7: eine perspektivische Darstellung des Halters in der Schließstellung mit dem hinter einer Sicherungsstrebe des Spannhebels eingefädelten Spanngurt.

In der Zeichnung ist ein Halter 1 gezeigt, der zur lösbaren Befestigung eines Anbauteils an einer Strebe, wie einem Rahmenrohr oder einem Lenkerrohr eines Zweirades dient. Das Anbauteil kann dabei insbesondere durch einen Teil der Beleuchtungseinrichtung des Zweirades, durch einen Fahrradcomputer oder allgemein eine Anzeige- und/oder Steuereinheit oder ein Zweiradschloss gebildet sein. Für diese Befestigung des Anbauteils weist der Halter 1 an seinem Gehäuse 3 ein Koppelglied 2 auf.

An dem Gehäuse 3 des Halters 1 ist weiterhin um eine Achse verdrehbar gelagert ein Spannhebel 4 angeordnet, der zwischen einer Öffnungsstellung und einer Schließstellung verstellt werden kann. An dem Spannhebel 4 ist das eine Ende eines um einen Teilbereich der Mantelfläche der Strebe zu führenden Spanngurtes 5 angeordnet.

Das Gehäuse 3 weist weiterhin eine Öffnung 6 auf, durch die das freie Ende des Spanngurtes 5 zurückführbar ist. Der Spanngurt 5 weist auf seiner der Strebe zugewandten Seite eine Anlagefläche 16 mit einem erhöhten Reibwert auf, so dass auch die Drehlage des Halters 1 provisorisch gesichert ist, sobald der Spanngurt 5 mit seiner Anlagefläche 16 gegen die Strebe gedrückt wird. Wenn der Spanngurt 5 durch die Öffnung 6 des Gehäuses 3 geführt ist, ist der Spanngurt 5 durch einen am Gehäuse 3 angeordneten Klemmhebel 7 festsetzbar. Der Klemmhebel 7 ist dabei als zweiarmiger Hebel gestaltet mit einem ersten Hebelarm 8, der zur Anlage an den Spanngurt 5 vorgesehen ist und bei seinem freien Ende auf der dem Spanngurt 5 zugewandten Seite einen Rastzahn 9 aufweist. Der zweite Hebelarm 10 ist als vorgespanntes Federglied gestaltet und bewirkt so eine Beaufschlagung des ersten Hebelarmes 8 in Richtung des Spanngurtes 5. Wird also der Spanngurt 5 durch die Öffnung des Gehäuses 3 geführt, erfolgt sofort eine provisorische Sicherung der Lage des Spanngurtes 5, der nicht mehr durch seine elastische Vorspannung infolge der Biegung um die Strebe aus der Öffnung 6 zurückgezogen werden kann. Der Nutzer kann damit den Spanngurt 5 soweit durch die Öffnung 6 schieben, bis die Anlagefläche 16 an der Strebe anliegt. In dieser Position kann dann der Spanngurt 5 im Bereich zwischen dem Spannhebel 4 und dem Klemmhebel 7 durch Verstellung des Spannhebels 4 von der Öffnungsstellung in die Schließstellung gespannt werden.

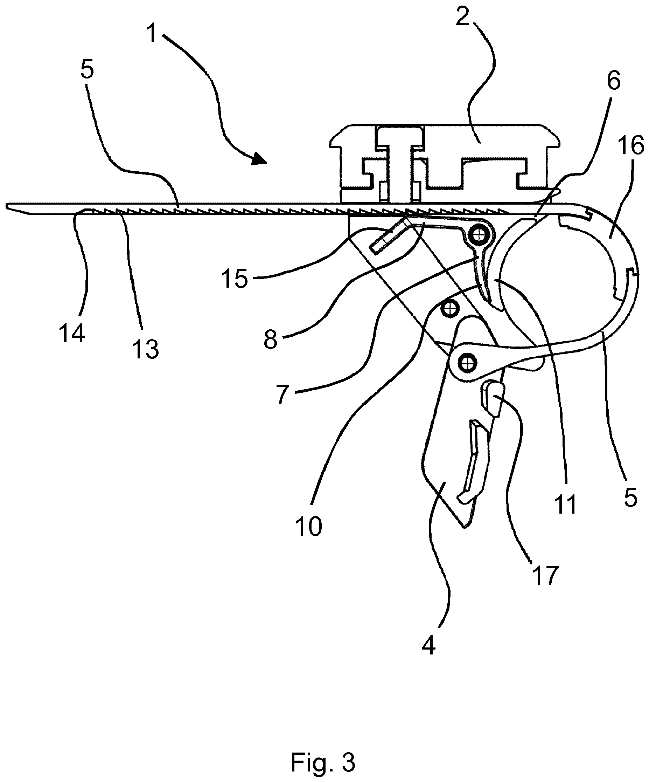

Wie insbesondere aus der Fig. 3 erkennbar ist, weist das Gehäuse 3 einen bogenförmigen Anlagebereich 11 für die Strebe auf, an dem der zweite Hebelarm 10 abgestützt ist.

Der Spanngurt 5 selber ist aus einem Material gebildet, das die Ausbildung einer belastbaren Verzahnung 10 erlaubt, die auf der dem zweiten Hebelarm 10 zugewandten Seite ausgebildet ist. Ein belastbares Material im Sinne der Erfindung ist dabei aus Metall oder einem Kunststoff, insbesondere Hartplastik gebildet.

Zu beachten ist weiterhin, dass die Verzahnung 12 als Sägezahnverzahnung gestaltet ist mit einer flachen Zahnflanke 13, die ein Darübergleiten des Rastzahns 9 in der einen Richtung erlaubt, und einer steilen Zahnflanke 14, die ein Darübergleiten des Rastzahnes 9 in der anderen Richtung blockiert.

Der erste Hebelarm 8 weist an seinem freien Ende eine Löseleiste 15 auf.

Im Folgenden wird die Montage des erfindungsgemäßen Halters 1 an der Strebe sowie die nachfolgende Demontage geschildert.

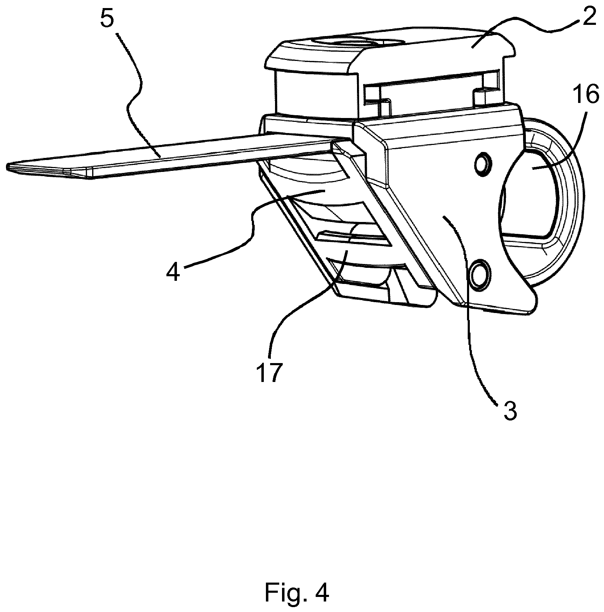

Wird beispielsweise der Halter 1 in der in Fig. 4 gezeigten Konfiguration ausgeliefert, ist zunächst der Spannhebel 4 aus der Schließstellung in die Öffnungsgestellung zu verstellen und sodann durch Betätigung der Löseleiste 15 der Klemmhebel 7 so gegen die vom zweiten Hebelarm 10 bereitgestellte Vorspannung zu verstellen, dass der Rastzahn 9 aus der Verzahnung 12 austreten kann, woraufhin der Nutzer den Spanngurt 5aus der Öffnung 6 des Gehäuses 3 entfernen kann.

Der Nutzer kann sodann den Halter 1 mit dem bogenförmigen Anlagebereich 11 an die Strebe ansetzen und den Spanngurt 5 um die Strebe herumführen, bis die Anlagefläche 16 mit dem erhöhten Reibwert an der Strebe anliegt. Dies kann simultan mit dem Einführen des freien Endes des Spanngurtes 5 in die Öffnung 6 des Gehäuses 3 erfolgen, wobei der Rastzahn 9 über die Verzahnung 12 ratscht. Einem erneuten Herausziehen des Spanngurtes 5 aus der Öffnung 6 wirkt die dem Rastzahn 9 anliegende steile Zahnflanke 14 der Sägezahnverzahnung 12 entgegen.

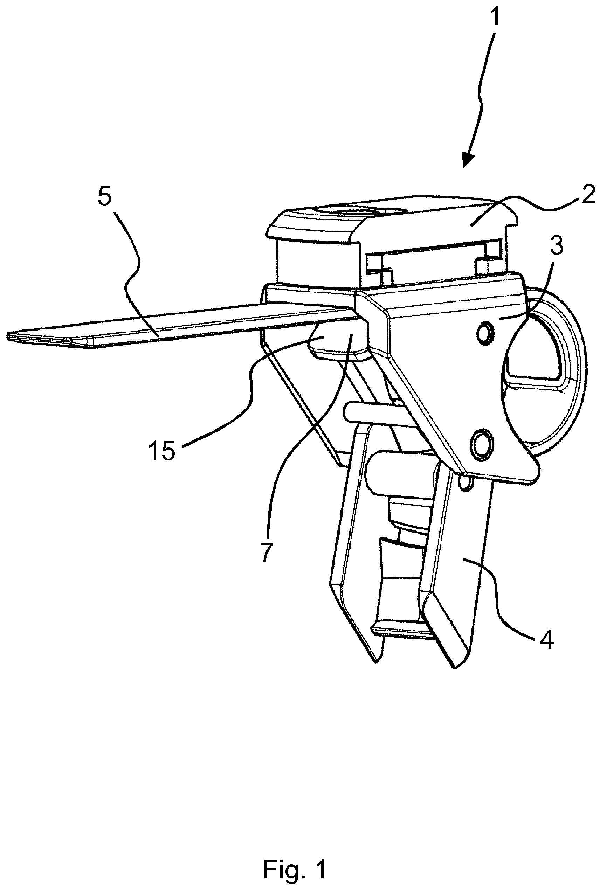

Ist die aus der Fig. 1 ersichtliche Konfiguration erreicht, kann der Nutzer den Spannhebel 4 aus der Öffnungsstellung in die Schließstellung (Fig. 4) verstellen und nachfolgend noch das freie Ende des Spanngurtes 5 hinter die Sicherungsstrebe 17 des Spannhebels 4 fädeln.

Zur Demontage des Halters 1 muss erneut das freie Ende des Spanngurtes 5 hinter der Sicherungsstrebe 17 hervorgezogen und der Spannhebel 4 von der Schließstellung in die Öffnungsstellung verstellt werden, woraufhin dann der Nutzer die Möglichkeit hat, erneut die Löseleiste 15 des Klemmhebels 7 zu betätigen, so dass der Rastzahn 9 aus der Verzahnung 12 des Spanngurtes 5 heraustritt und somit der Spanngurt 5 aus der Öffnung 6 des Gehäuses 3 herausgezogen werden kann und die Umschlingung der Strebe des Zweirades beendet wird.

### Bezugszeichenliste

- 1: Halter
- 2: Koppelglied
- 3: Gehäuse
- 4: Spannhebel
- 5: Spanngurt
- 6: Öffnung
- 7: Klemmhebel
- 8: erster Hebelarm
- 9: Rastzahn
- 10: zweiter Hebelarm
- 11: Anlagebereich
- 12: Verzahnung
- 13: flache Zahnflanke
- 14: steile Zahnflanke
- 15: Löseleiste
- 16: Anlagefläche
- 17: Sicherungsstrebe

## Patentansprüche

1. Halter zur lösbaren Befestigung eines Anbauteils an einer Strebe, wie einem Rahmenrohr oder einem Lenkerrohr eines Zweirades, mit einem ein Koppelglied (2) für das Anbauteil aufweisenden Gehäuse (3), mit einem zwischen einer Öffnungsstellung und einer Schließstellung verstellbar an dem Gehäuse (3) gelagerten Spannhebel (4), an dem das eine Ende eines um einen Teilbereich der Mantelfläche der Strebe zu führenden Spanngurtes (5) angeordnet ist, mit einer in dem Gehäuse ausgebildeten Öffnung (6), durch die das freie Ende des Spanngurtes (5) zurückführbar und mit einem am Gehäuse (3) angeordneten Klemmhebel (7) festsetzbar ist, wobei der Spanngurt (5) im Bereich zwischen dem Spannhebel (4) und dem Klemmhebel (7) durch Verstellen des Spannhebels (4) von der Öffnungsstellung in die Schließstellung spannbar ist, **dadurch gekennzeichnet, dass** der Klemmhebel (7) als zweiarmiger Hebel gestaltet ist mit einem ersten Hebelarm (8), der zur Anlage an den Spanngurt (5) vorgesehen ist und bei seinem freien Ende auf der dem Spanngurt zugewandten Seite einen Rastzahn (9) aufweist, und dass der zweite Hebelarm (10) als vorgespanntes Federglied gestaltet ist zur Beaufschlagung des ersten Hebelarmes (9) in Richtung des Spanngurtes (5).

2. Halter nach Anspruch 1, **dadurch gekennzeichnet, dass** das Gehäuse einen bogenförmigen Anlagebereich (11) für die Strebe aufweist, an dem der zweite Hebelarm abgestützt ist.

3. Halter nach Anspruch 1 oder 2, **dadurch gekennzeichnet, dass** der Spanngurt (5) aus einem Material gebildet ist, das die Ausbildung einer belastbaren Verzahnung (12) erlaubt, und dass auf der dem zweiten Hebelarm (10) zugewandten Seite eine Verzahnung (12) ausgebildet ist.

4. Halter nach Anspruch 3, **dadurch gekennzeichnet, dass** die Verzahnung (12) als Sägezahnverzahnung gestaltet ist mit einer flachen Zahnflanke (13), die ein Darübergleiten des Rastzahns (9) in der einen Richtung erlaubt, und einer steilen Zahnflanke (14), die ein Darübergleiten des Rastzahns (9) in der anderen Richtung blockiert.

5. Halter nach einem der Ansprüche 1 bis 4, **dadurch gekennzeichnet, dass** der erste Hebelarm (8) an seinem freien Ende eine Löseleiste (15) aufweist.

6. Halter nach einem der Ansprüche 1 bis 5, **dadurch gekennzeichnet, dass** der Spanngurt (5) auf seiner der Strebe zugewandten Seite eine Anlagefläche (16) mit einem erhöhten Reibwert aufweist.
